# EUROPÄISCHE PATENTSCHRIFT

(11) **EP 0 911 231 B1**
(45) Veröffentlichungstag und Bekanntmachung des Hinweises auf die Patenterteilung: **09.07.2003**
(21) Anmeldenummer: 98117712.4
(22) Anmeldetag: 18.09.1998
(51) Int. Cl.: B60S 1/08

(54) **Regensensor**
Rain sensor
Capteur de pluie

(30) Priorität: 18.10.1997 DE 19746163
(43) Veröffentlichungstag der Anmeldung: 28.04.1999
(73) Patentinhaber: Volkswagen Aktiengesellschaft, 38436 Wolfsburg (DE)
(72) Erfinder: Rennert, Ingo, 38436 Müden/Aller (DE); Böckmann, Ingo Dipl.-Ing., 38551 Ribbesbüttel (DE)

(56) Entgegenhaltungen:
- DE-A- 3 825 665
- DE-A- 4 329 188
- DE-A- 4 333 665
- US-A- 5 451 280
- US-A- 5 498 866

## Beschreibung

Die Erfindung betrifft eine Regensensoranordnung, umfassend mindestens einen Strahlensender, einen Strahlenempfängen und eine Scheibe, wobei der Strahlensender an einer ersten Randkante und der Strahlenempfänger an einer zweiten, der ersten Randkante gegenüberliegenden Randkante einer Scheibe auf der Unterseite der Scheibe angeordnet sind.

Aus der DE 41 23 641 A1 ist ein optischer Regen- und Verschmutzungssensor zur automatischen Regelung eines Scheibenwischermotors bekannt, bei der ein optischer Sender und Empfänger in einem Gehäuse innen an der Decke des Fahrzeuges angeordnet sind. Die Scheibe wird dabei mit einem Lichtstrahl angestrahlt, der zunächst ein Gleichlichtstrahl ist. Trifft dieser Gleichlichtstrahl auf der Scheibe auf Wassertropfen, so wird dieser in unregelmäßiger Weise moduliert, weil die Wassertropfen durch den auftreffenden Fahrtwind und die gegenwirkende Oberflächenspannung des Wassers ständig in unkontrollierter Weise ihre Form ändern. Dieses modulierte Licht wird von den Wassertropfen diffus reflektiert, wobei die Frequenz und die Amplitude der Modulation ein Maß für die Anzahl der auf der Scheibe sitzenden Regentropfen sind, das heißt also für die Stärke des fallenden Regens. Ein Teil der reflektierten Lichtstrahlen wird von dem Empfänger aufgefangen, dem eine Auswerteschaltung nachgeordnet ist, in der zunächst das auf den Gleichlichtanteil zurückgehende Signal herausgefiltert wird und das verbleibende Signal nach Frequenz und Amplitude derart ausgewertet wird, daß ein der Stärke des fallenden Regens proportionales Signal zur Verfügung steht, das nach Verstärkung zur Steuerung der Drehgeschwindigkeit des Scheibenwischermotors verwendet wird. Der optische Sender und Empfänger sind dabei vorzugsweise im Infrarot-Bereich ausgebildet.

Nachteilig an der bekannten Vorrichtung ist, daß einerseits nur eine sehr kleine Fläche der Ober- bzw. Außenseite der Scheibe von der Lichtmessung erfaßt wird und/oder daß das Licht durch vielfache Reflexionen in der Glasscheibe einen langen Weg im Glasmaterial zurücklegen muß und dadurch geschwächt wird. Die Erfassung eines nur sehr kleinen Bereiches der Glasaußenseite hat den Nachteil, daß beim Auftreten vereinzelter Verschmutzungen oder Wassertropfen eine sichere Erkennung des Gesamtzustandes der Scheibe oft nicht möglich ist. Ein weiterer Nachteil besteht darin, daß bei starker Sonneneinstrahlung von außen die Gefahr einer Beschädigung bzw. Übersteuerung der Lichtmeßeinrichtung infolge zu hoher Lichtintensität besteht. Des weiteren stört die Anbringung des Gehäuses mit Sender und Empfänger den ästhetischen Gesamteindruck und/oder stört, bei Anbringung im Bereich der Scheibe, das Sichtfeld des Fahrers.

Aus der DE 41 02 146 C1 ist ein Regensensor bekannt, der an der Innenseite der Scheibe angeklebt ist. Dieser Sensor besteht im wesentlichen aus einem ersten und zweiten optischen Element aus Acrylglas oder anderem durchsichtigen Kunststoff mit einem Brechungsindex ähnlich Glas. Die beiden optischen Elemente sind plattenfömig ausgebildet, wobei die optischen Elemente jeweils zur Glasscheibe einen Winkel von 45° und zueinander von 90° einschließen und mit der Glasscheibe verklebt sind. Die von der Glasscheibe wegweisende schmale Stirnfläche des ersten optischen Elements ist als Teilfläche eines Rotationsellipsoides ausgebildet und verspiegelt, so daß diese als Reflexionsfläche dient. Das zweite optische Element ist als Koppelelement zur Ein- und Auskopplung von Licht ausgebildet. Hierzu ist das zweite optische Element an der oberen und unteren freien Ecke abgeschrägt, wobei die Abschrägung als Eintritts- bzw. Austrittsfläche für Licht ausgebildet ist. An der oberen Eintrittsfläche ist als Lichtquelle eine LED angeordnet, wobei die Eintrittsfläche eine Krümmung aufweist, so daß die Lichtstrahlen senkrecht durch die Eintrittsfläche in das zweite optische Element eindringen können. Entsprechend weist die Austrittsfläche eine Krümmung auf, durch die das fokussierte Licht senkrecht hindurchgeht, in dessen Fokussierpunkt ein Photodetektor angeordnet ist. Vorteilhaft an der Vorrichtung ist, daß zwar einerseits die an der Scheibe verlaufende Strahlführung relativ kurz ist und andererseits dennoch ein großer Bereich der Scheibenoberfläche als sensitive Fläche erfaßt wird. Ein weiterer Vorteil besteht darin, daß der Gesamtweg für jeden einzelnen Lichtstrahl der Lichtquelle gleich lang ist, was zu definierten Verhältnissen führt. Des weiteren kann von außen einfallendes Fremdlicht nicht auf die Lichtmeßeinrichtung fokussiert werden, so daß diese ohne zusätzliche Maßnahmen gegen eine Beschädigung oder Übersteuerung durch Fremdlicht geschützt ist.

Nachteilig an der Vorrichtung ist einerseits die Störung des Sichtfeldes des Fahrers und andererseits deren komplizierte Herstellung. Strahlenleitkörper dieser Art haben Dickenabmessungen von einigen Zentimetern, wobei insbesondere aus Transportgründen die Verklebung im Werk des Automobilherstellers erfolgen muß.

Aus der DE 38 25 665 A1 ist ein Regensensor bekannt, bei der in der Nachbarschaft einer ersten Randkante der Scheibe eine Lichtquelle angeordnet ist, welche die durch die erste Randkante in die Scheibe eintretenden Lichtstrahlen emittiert und in der Nachbarschaft einer zweiten, der ersten Randkante gegenüberliegenden Randkante ein Empfänger angeordnet ist, das heißt die Lichtstrahlen durchlaufen von oben nach unten oder umgekehrt die Scheibe in voller Länge. Neben dem großen erfaßten Bereich, aufgrund dessen eine gute statistische Auswertung möglich ist, ist ein weiterer Vorteil der getrennten Anordnung von Sender und Empfänger, daß diese jeweils im Randbereich der Scheibe angeordnet werden können, so daß diese das Sichtfeld des Fahrers nicht beeinträchtigen.

Nachteilig an dem bekannten Regensensor ist, daß aufgrund der großen Verluste über die lange Strecke entweder eine Lichtquelle mit großer Leistung oder ein Empfänger mit hoher Empfindlichkeit gewählt werden muß.

Aus der DE 195 12 864 C1 ist eine Autoglasscheibe für eine einen Strahlensender und einen Strahlenempfänger umfassende Regensensoreinrichtung bekannt, mit einem mit der Autoglasscheibe optisch gekoppelten Strahlenleitkörper, durch den die von dem Strahlensender ausgehenden Strahlen unter einem flachen Winkel eingekoppelt und die an der Außenseite der Autoglasscheibe reflektierten Strahlen ausgekoppelt und zu dem Strahlenempfänger geleitet werden, bei der der Strahlenleitkörper als in eine Polymerfolie eingearbeitetes Volumenhologramm ausgebildet ist. Da derartige Polymerfolien relativ dünn sind, wird weiter vorgeschlagen, daß die Polymerfolie in der thermoplastischen Zwischenschicht einer Verbundglasscheibe angeordnet ist, so daß diese gegen äußere Einflüsse geschützt ist.

Nachteilig an der bekannten Autoglasscheibe ist, daß Strahlensender und Strahlenempfänger sowie elektrische Zuleitungen im Sichtfeld des Fahrers auf der Autoglasscheibe angeordnet werden müssen und andererseits nur eine geringe Fläche der Autoglasscheibe sensorisch abgetastet wird, so daß die statistische Meßgenauigkeit der Regensensoreinrichtung nur sehr gering ist.

Der Erfindung liegt daher das technische Problem zugrunde, einen Regensensor mit guter statistischer Meßgenauigkeit zu schaffen, der nicht das Sichtfeld des Fahrers einschränkt oder stört.

Die Lösung des technischen Problems ergibt sich aus den Merkmalen des Patentanspruches 1. Durch die Anordnung des Strahlensenders und des Strahlenempfängers an gegenüberliegenden Randkanten der Scheibe unterhalb des Schwarzdruckbereiches sind diese und die zugehörigen elektrischen Zuleitungen für den Fahrer nicht mehr sichtbar und stören nicht dessen Sichtfeld. Des weiteren wird durch die räumlich getrennte Anordnung erreicht, daß eine große Fläche der Scheibe sensiert wird, so daß eine größere statistische Meßgenauigkeit erzielbar ist. Zur Reduzierung der statischen Strahlungsleistungdämpfung aufgrund von Transmissions- und Absorptionsverlusten ist in einer vorteilhaften Ausbildung der Erfindung auf der Unterseite der Scheibe eine Metallschicht aufgebracht, wobei im Strahlengang des Strahlensenders und des Strahlenempfängers Schwarzdruckbereich und Metallschicht durchlässig ausgebildet sind, so daß über diese durchlässigen Bereiche die Strahlung in die Scheibe ein- und auskoppelbar ist, wobei durch den hohen Reflexionsgrad der Metallschicht die Strahlungsverluste reduziert werden.

Weitere vorteilhafte Ausgestaltungen der Erfindung ergeben sich aus den Unteransprüchen.

Die Erfindung wird anhand eines bevorzugten Ausführungsbeispiels näher erläutert. Die Figuren zeigen:
- Fig. 1: eine Vorderansicht auf eine Scheibe mit einem Regensensor und
- Fig. 2: eine Schnittdarstellung der Scheibe entlang der Mittellinie.

Die Scheibe 1, beispielsweise die Windschutz- oder Heckscheibe eines Kraftfahrzeuges, ist im Allgemeinen von einem lichtundurchlässigen Schwarzdruckbereich 2 umrandet. Am oberen Rand der Scheibe 1 ist mittig hinter dem Schwarzdruckbereich 2 ein prismatischer Strahlensender 3 angeordnet, der vorzugsweise als Infrarot-LED ausgebildet ist. Am unteren Rand der Scheibe 1 ist ebenfalls mittig hinter dem Schwarzdruckbereich 2 ein prismatischer Strahlenempfänger 4 angeordnet, der zum Strahlensender 3 passend ausgebildet ist. Im Strahlengang des Strahlensenders 3 und des Strahlenempfängers 4 ist der Schwarzdruckbereich 2, beispielsweise durch offene Schlitze lichtdurchlässig ausgebildet. Zur Schaffung eines optischen Eindruckes können darunter liegende Bauteile im Bereich der Schlitze eine schwarze Beschichtung aufweisen.

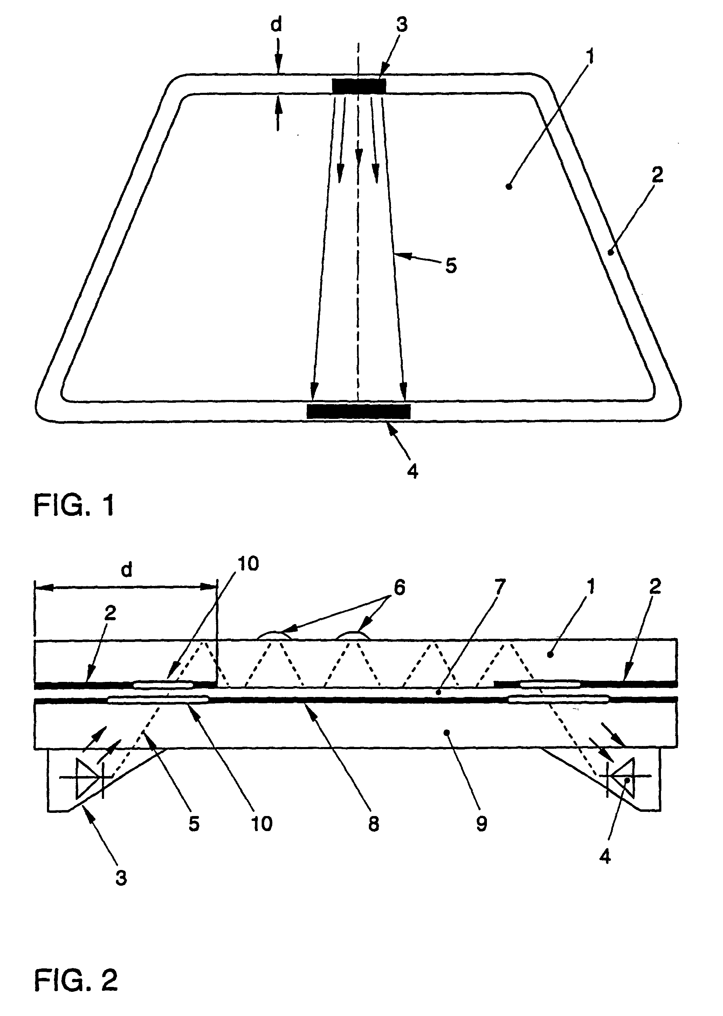

Die vom Strahlensender 3 emittierte Strahlung 5 wird in die Scheibe 1 eingekoppelt und wie in einem Lichtwellenleiter durch Mehrfachreflexionen zum Strahlenempfänger 4 übertragen und von diesem erfaßt. Trifft nun die Strahlung 5 auf einen Punkt der Scheibe 1, auf dem sich ein Regentropfen 6 befindet, so wird aufgrund des geänderten Brechungsindexes von Wasser im Verhältnis zu Luft ein Teil der Strahlung 5 aus der Scheibe 1 ausgekoppelt, so daß die am Strahlenempfänger 4 gemessene Strahlenleistung abnimmt. Daher stellt die erfaßte Strahlungsleistung am Strahlenempfänger 4 ein Maß für die Anzahl der Regentropfen 6 auf der Scheibe 1 dar. Da auch ohne Regentropfen 6 ein Teil der Strahlung 5 transmittiert und reflektiert wird, kann dies aufgrund der relativ großen Entfernung zwischen Strahlensender 3 und Strahlenempfänger 4 zu einer großen statischen Verlustleistung führen, so daß zur Regensensierung nur ein geringer Anteil des Dynamikbereiches des Strahlenempfängers 4 ausgenutzt werden kann. Daher wird auf die Unterseite der Scheibe 1 eine Folie 7 mit einer Metallschicht 8 aufgebracht. Die Metallschicht 8 wird vorzugsweise auf die Folie 7 aufgedampft. Die Folie 7 wird anschließend mit der zur Metallschicht 8 abgewandten Seite mit der Scheibe 1 verklebt, wobei Brechungsindex von Kleber und Folie 7 auf die Scheibe 1 abgestimmt sind. Da Windschutzscheiben aus Sicherheitsgründen als Verbundglas ausgebildet sein müssen, kann beispielsweise eine weitere Scheibe 9 auf die Metallschicht 8 aufgebracht sein. Der Strahlensender 3 wird dann derart zur Scheibe 1 ausgerichtet, daß die Strahlung 5 durch prismatische Brechung innerhalb der Scheibe 1 zum Strahlenempfänger 4 geführt wird, was in Fig. 2 gestrichelt dargestellt ist. Da die Strahlung 5 aber weder die Metallschicht 8 noch den Schwarzdruckbereich 2 durchdringen kann, sind in diese gelaserte Schlitze 10 im Strahlengang des Strahlensenders 3 und des Strahlenempfängers 4 eingearbeitet.

Im Bereich zwischen den Schlitzen 10 reflektiert die Metallschicht 8 hingegen die Strahlung 5 fast vollständig, so daß die statische Verlustleistung reduziert wird, so daß ein größerer Dynamikbereich des Strahlenempfängers 4 ausgenutzt werden kann. Durch entsprechende Leistung oder Anzahl der Strahlensender 3 kann eine optimale Anpassung an den Dynamikbereich des Strahlenempfängers 4 vorgenommen werden.

Aufgrund der separaten Anordnung von Strahlensender 3 und Strahlenempfänger 4 wird diesen vorzugsweise jeweils ein eigener Controller zugeordnet, die miteinander über eine externe Busverbindung, Kabelstrecke oder Siebdruckleitung "on Glas" verbunden sind. Die Controller können als separate Bauelemente oder als "Chip on Glas" ausgebildet sein.

### BEZUGSZEICHENLISTE

- 1: Scheibe
- 2: Schwarzdruckbereich
- 3: Strahlensender
- 4: Strahlenempfänger
- 5: Strahlung
- 6: Regentropfen
- 7: Folie
- 8: Metallschicht
- 9: Scheibe
- 10: Schlitze

## Patentansprüche

1. Regensensoranordnung, umfassend mindestens einen Strahlensender (3), einen Strahlenempfänger (4) und eine Scheibe (1), wobei der Strahlensender (3) an einer ersten Randkante und der Strahlenempfänger (4) an einer zweiten, der ersten Randkante gegenüberliegenden Randkante einer Scheibe (1) auf der Unterseite der Scheibe (1) angeordnet sind,
**dadurch gekennzeichnet, daß**
der Strahlensender (3) und der Strahlenempfänger (4) in einem Schwarzdruckbereich (2) der Scheibe (1) angeordnet sind und der Schwarzdruckbereich (2) im optischen Strahlengang des Strahlensenders (3) und des Strahlenempfängers (4) durchlässig ausgebildet ist.

2. Regensensoranordnung nach Anspruch 1, **dadurch gekennzeichnet, daß** auf der Unterseite der Scheibe (1) eine Metallschicht (8) aufgebracht ist, wobei die Metallschicht (8) und der Schwarzdruckbereich (2) im optischen Strahlengang des Strahlensenders (3) und des Strahlenempfängers (4) strahlungsdurchlässig ausgebildet sind.

3. Regensensoranordnung nach Anspruch 2, **dadurch gekennzeichnet, daß** die Metallschicht (8) auf die Unterseite der Scheibe (1) aufgedampft ist.

4. Regensensoranordnung nach Anspruch 2, **dadurch gekennzeichnet, daß** auf der Unterseite der Scheibe (1) eine Folie mit der Metallschicht (8) aufgebracht ist.

5. Regensensoranordnung nach Anspruch 4, **dadurch gekennzeichnet, daß** die Folie (7) als Polymerfolie ausgebildet ist.

6. Regensensoranordnung nach einem der Ansprüche 2 bis 4, **dadurch gekennzeichnet, daß** die durchlässigen Bereiche der Metallschicht (8) und des Schwarzdruckbereiches (2) als Schlitze (10) ausgebildet sind.

7. Regensensoranordnung nach einem der Ansprüche 1 bis 6, **dadurch gekennzeichnet, daß** der Strahlensender (3) und der Strahlenempfänger (4) am oberen und unteren Rand der Scheibe (1) angeordnet sind.

8. Regensensoranordnung nach Anspruch 7, **dadurch gekennzeichnet, daß** Strahlensender (3) und Strahlenempfänger (4) mittig zur Scheibe (1) angeordnet sind.

9. Regensensoranordnung nach einem der vorangegangenen Ansprüche, **dadurch gekennzeichnet, daß** dem Strahlensender (3) und dem Strahlenempfänger (4) jeweils ein Controller zugeordnet ist, die miteinander verbunden sind.

10. Regensensoranordnung nach Anspruch 2, **dadurch gekennzeichnet, daß** auf die Metallschicht (8) einen weitere Scheibe (9) aufgebracht ist.

11. Regensensoranordnung nach einem der vorangegangenen Ansprüche, **dadurch gekennzeichnet, daß** der Strahlensender (3) als LED ausgebildet ist.

12. Regensensoranordnung nach Anspruch 11, **dadurch gekennzeichnet, daß** die LED als Infrarot-LED ausgebildet ist.

13. Regensensoranordnung nach einem der vorangegangenen Ansprüche, **dadurch gekennzeichnet, daß** der Strahlenempfänger (4) als Photo-Diode ausgebildet ist.

## Claims

1. Rain sensor arrangement comprising at least a beam transmitter (3), a beam receiver (4) and a windowpane (1), the beam transmitter (3) being arranged at a first rim edge, and the beam receiver (4) being arranged at a second rim edge, opposite the first rim edge, of a windowpane (1), on the underside of the windowpane (1), **characterized in that** the beam transmitter (3) and the beam receiver (4) are arranged in a black print region (2) of the windowpane (1), and the black print region (2) is designed to be transparent in the optical beam path of the beam transmitter (3) and the beam receiver (4).

2. Rain sensor arrangement according to Claim 1, **characterized in that** a metal layer (8) is applied to the underside of the windowpane (1), the metal layer (8) and the black print region (2) being designed to be transparent to radiation in the optical beam path of the beam transmitter (3) and the beam receiver (4).

3. Rain sensor arrangement according to Claim 2, **characterized in that** the metal layer (8) is vapour-deposited onto the underside of the windowpane (1).

4. Rain sensor arrangement according to Claim 2, **characterized in that** a film with the metal layer (8) is applied to the underside of the windowpane (1).

5. Rain sensor arrangement according to Claim 4, **characterized in that** the film (7) is designed as a polymer film.

6. Rain sensor arrangement according to one of Claims 2 to 4, **characterized in that** the transparent regions of the metal layer (8) and the black print region (2) are designed as slots (10).

7. Rain sensor arrangement according to one of Claims 1 to 6, **characterized in that** the beam transmitter (3) and the beam receiver (4) are arranged at the upper and lower rim of the windowpane (1).

8. Rain sensor arrangement according to Claim 7, **characterized in that** the beam transmitter (3) and beam receiver (4) are arranged in the middle of the windowpane (1).

9. Rain sensor arrangement according to one of the preceding claims, **characterized in that** the beam transmitter (3) and the beam receiver (4) are respectively assigned a controller, which are interconnected.

10. Rain sensor arrangement according to Claim 2, **characterized in that** a further windowpane (9) is applied to the metal layer (8).

11. Rain sensor arrangement according to one of the preceding claims, **characterized in that** the beam transmitter (3) is designed as an LED.

12. Rain sensor arrangement according to Claim 11, **characterized in that** the LED is designed as an infrared LED.

13. Rain sensor arrangement according to one of the preceding claims, **characterized in that** the beam receiver (4) is designed as a photodiode.

## Revendications

1. Agencement de détection de la pluie comprenant au moins un émetteur de rayonnement (3), un récepteur de rayonnement (4) et une vitre (1), l'émetteur de rayonnement (3) étant disposé sur une première bordure et le récepteur de rayonnement (4) sur une deuxième bordure située face à la première bordure d'une vitre (1), sur le côté inférieur de la vitre (1), **caractérisé en ce que** l'émetteur de rayonnement (3) et le récepteur de rayonnement (4) sont disposés dans une zone (2) imprimée en noir de la vitre (1), la zone (2) imprimée en noir étant transparente dans le parcours optique du rayonnement de l'émetteur de rayonnement (3) et du récepteur de rayonnement (4).

2. Agencement de détection de la pluie selon la revendication 1, **caractérisé en ce qu'**une couche métallique (8) est appliquée sur le côté inférieur de la vitre (1), la couche métallique (8) et la zone (2) imprimée en noir étant transparentes au rayonnement dans le parcours optique du rayonnement de l'émetteur de rayonnement (3) et du récepteur de rayonnement (4).

3. Agencement de détection de la pluie selon la revendication 2, **caractérisé en ce que** la couche métallique (8) est vaporisée sur le côté inférieur de la vitre (1).

4. Agencement de détection de la pluie selon la revendication 2, **caractérisé en ce qu'**une feuille dotée de la couche métallique (8) est appliquée sur le côté inférieur de la vitre (1).

5. Agencement de détection de la pluie selon la revendication 4, **caractérisé en ce que** la feuille (7) est une feuille polymère.

6. Agencement de détection de la pluie selon l'une des revendications 2 à 4, **caractérisé en ce que** les zones transparentes de la couche métallique (8) et la zone (2) imprimée en noir sont des fentes (10).

7. Agencement de détection de la pluie selon l'une des revendications 1 à 6, **caractérisé en ce que** l'émetteur de rayonnement (3) et le récepteur de rayonnement (4) sont disposés sur le bord supérieur et sur le bord inférieur de la vitre (1).

8. Agencement de détection de la pluie selon la revendication 7, **caractérisé en ce que** l'émetteur de rayonnement (3) et le récepteur de rayonnement (4) sont disposés au milieu de la vitre (1).

9. Agencement de détection de la pluie selon l'une des revendications précédentes, **caractérisé en ce que** des contrôleurs sont associés respectivement à l'émetteur de rayonnement (3) et au récepteur de rayonnement (4) et sont reliés l'un à l'autre.

10. Agencement de détection de la pluie selon la revendication 2, **caractérisé en ce qu'**une autre vitre (9) est appliquée sur la couche métallique (8).

11. Agencement de détection de la pluie selon l'une des revendications précédentes, **caractérisé en ce que** l'émetteur de rayonnement (3) est une LED.

12. Agencement de détection de la pluie selon la revendication 11, **caractérisé en ce que** la LED est une LED infrarouge.

13. Agencement de détection de la pluie selon l'une des revendications précédentes, **caractérisé en ce que** le récepteur de rayonnement (4) est une photodiode.
